# EUROPÄISCHE PATENTSCHRIFT

(11) **EP 3 653 402 B1**
(45) Veröffentlichungstag und Bekanntmachung des Hinweises auf die Patenterteilung: **18.08.2021**
(21) Anmeldenummer: 19200698.9
(22) Anmeldetag: 01.10.2019
(51) Int. Cl.: B60C 11/00

(54) **FAHRZEUGREIFEN MIT MINDESTENS EINER ERSTEN GUMMIKOMPONENTE UND MINDESTENS EINER ZWEITEN GUMMIKOMPONENTE**
VEHICLE TYRE WITH AT LEAST ONE FIRST RUBBER COMPONENT AND AT LEAST ONE SECOND RUBBER COMPONENT
PNEUMATIQUES DE VÉHICULE POURVU D'AU MOINS UN PREMIER COMPOSANT EN CAOUTCHOUC ET D'AU MOINS UN SECOND COMPOSANT EN CAOUTCHOUC

(30) Priorität: 16.11.2018 DE 102018219645
(43) Veröffentlichungstag der Anmeldung: 20.05.2020
(73) Patentinhaber: Continental Reifen Deutschland GmbH, 30165 Hannover (DE)
(72) Erfinder: Jabri, Mohamed Aymen, 30165 Hannover (DE); Pavon Sierra, Viktoria, 30165 Hannover (DE)
(74) Vertreter: Continental Corporation

(56) Entgegenhaltungen:
- EP-A1- 3 300 924
- WO-A1-2015/032601
- WO-A1-2016/173727
- FR-A1- 2 952 855

## Beschreibung

Die Erfindung betrifft einen Fahrzeugreifen, umfassend: mindestens eine Verstärkungslage, einen Laufstreifen mit einer ersten und einer zweiten Gummikomponente, mindestens einen Laufstreifenabschnitt des einen Laufstreifens, wobei der eine Laufstreifenabschnitt in radialer Richtung unterhalb der Lauffläche des Laufstreifens des Fahrzeugreifens angeordnet ist und ein zur Reifenumfangsrichtung senkrecht verlaufender Querschnitt des einen Laufstreifenabschnitts mindestens eine erste Gummikomponente mit einer sich in radiale Richtung erstreckenden ersten Höhe und mindestens eine zweite Gummikomponente mit einer sich in radiale Richtung erstreckenden zweiten Höhe aufweist.

An den Laufstreifen eines Fahrzeugluftreifens werden unterschiedliche Anforderungen gestellt. Da der Laufstreifen, insbesondere die Cap des Laufstreifens, unmittelbaren Kontakt mit der Fahrbahn hat, ist es wesentlich, dass die radial äußere Oberfläche des Laufstreifens über die gesamte Nutzungsdauer vorteilhafte Eigenschaften bezüglich Haftung, Griff und Bremseigenschaften aufweist. Weiter sind gutes Fahrverhalten bei verschiedenen Untergrundbeschaffenheiten sowie ein geringer Rollwiderstand von Vorteil. Bei Reifen, die unter winterlichen Fahrbedingungen eingesetzt werden sollen, sollen vorteilhafte Eigenschaften bzgl. Schneefahrverhalten, Trockenfahrverhalten, Naßbremseigenschaften, Kurvensteifigkeit und Rollwiderstand sichergestellt sein.

Im Allgemeinen lassen sich Laufstreifen hinsichtlich dieser Eigenschaften nicht so ausführen, dass alle Eigenschaften gleichermaßen verbessert sind. Bekannt sind Reifen, deren Laufstreifenoberfläche Bereiche mit unterschiedlichen Kautschukmischungen aufweisen. Bisweilen ist es jedoch schwer die unterschiedlichen Eigenschaften in einer Kautschukmischung zu vereinen oder unabhängig voneinander genau einzustellen. So kommt es im Stand der Technik häufig vor, dass eine erste Kautschukmischung nur ein gutes Fahrverhalten auf trockener Fahrbahn und eine zweite Kautschukmischung nur ein gutes Fahrverhalten auf schneebedeckter Fahrbahn aufweist, da bestimmte Eigenschaften der ersten und zweiten Kautschukmischung sich gegenseitig beeinflussen und somit eine ideale Kautschukmischung verhindern. Dies wird beispielsweise in dem bekannten "Magischen Dreieck" des Autoreifens veranschaulicht.

Aus der DE 102015207931 A1 ist ein Fahrzeugluftreifen mit einem Laufstreifen bekannt, "wobei der Laufstreifenabschnitt einen Materialstreifen, welcher in etwa in Umfangsrichtung helixförmig in Windungen angeordnet ist, aufweist, wobei der Materialstreifen im Bereich des Laufstreifenabschnitts in seiner Längsrichtung zumindest zwei Schichten aufweist, wobei die erste Schicht aus einer ersten Kautschukmischung und die zweite Schicht aus einer dazu verschiedenen zweiten Kautschukmischung gebildet ist und wobei die erste Schicht und die zweite Schicht die radial äußere Oberfläche des Laufstreifenabschnitts mit der radial inneren Oberfläche des Laufstreifenabschnitts verbinden dadurch gekennzeichnet, dass die erste Kautschukmischung und die zweite Kautschukmischung im vulkanisierten Zustand in etwa die gleiche Shore-A-Härte, ermittelt bei Raumtemperatur gemäß DIN ISO 7619-1, aufweisen und dass sich die erste Kautschukmischung und die zweite Kautschukmischung im vulkanisierten Zustand in zumindest einer weiteren physikalischen Eigenschaft unterscheiden" (s. Anspruch 1).

Ein anderer Reifen ist aus der EP 0 875 367 A2 bekannt. Hierbei erstreckt sich der Laufstreifenabschnitt über die gesamte axiale Breite des Laufstreifens und die Kautschukmischungen der beiden Schichten des Materialstreifens unterscheiden sich in ihrer Härte. Durch diese Kombination aus Kautschukmischungen unterschiedlicher Härte und somit mit unterschiedlichem Abriebverhalten soll der Reifen bei einfacher Herstellung eine vorteilhafte Haftung aufweisen. Kautschukmischungen mit geringer Härte weisen allerdings üblicherweise ein unvorteilhaftes Trockenfahrverhalten auf.

Weitere Fahrzeugreifen mit Laufstreifenabschnitten aus verschiedenen Gummikomponenten sind bekannt aus WO 2016/173727 A1, FR 2 952 855 A1, EP 3 300 924 A1 und WO 2015/032601 A1. Der Erfindung liegt die Aufgabe zugrunde, einen Fahrzeugreifen zur Verfügung zu stellen, bei dem der Zielkonflikt zwischen Schneefahrverhalten und Rollwiderstand entkoppelt ist.

Ein weiteres Ziel ist es, die Eigenschaften des Trockenfahrverhaltens, des Naßfahrverhaltens und des Schneefahrverhaltens eines Fahrzeugreifens zu entkoppeln, sodass sie unabhängig voneinander und bevorzugt punktgenau eingestellt werden können. Dies gilt insbesondere für die Entkopplung der Eigenschaften des Trockenfahrverhalten und des Schneefahrverhalten. Zudem sollte der Reifen insbesondere einfach herzustellen sein und länger haltbar sein. Die Begriffe Naß-, Schnee- und Trockenfahrverhalten sind dem Fachmann auch unter Naß-, Schnee- und Trockenhandling des Fahrzeugreifens bekannt.

Gelöst wird diese Aufgabe erfindungsgemäß durch einen Fahrzeugluftreifen nach Anspruch 1.

Es ist eine große Leistung der vorliegenden Erfindung, einen Reifen mit zwei verschiedenen Gummikomponenten bereitzustellen, wobei die Gummikomponenten ringförmig sind und axial symmetrisch um die Achse des Fahrzeugluftreifens verlaufen. Hierdurch können die einzelnen Ringe der zwei verschiedenen Gummikomponenten in ihrer Kautschukzusammensetzung, in ihrer Breite oder in ihrer Höhe entlang der axialen Richtung oder auch entlang der Umfangsrichtung problemlos variiert werden und weisen insbesondere eine größere Stabilität gegenüber helixförmig gewickelten Streifen, d.h. Gummikomponenten, auf.

Hierdurch kann einerseits der Laufstreifen eines erfindungsmäßen Fahrzeugreifens auf einen bestimmten Untergrund oder verschiedene Untergründe noch genauer eingestellt werden und gleichzeitig andere Reifeneigenschaften wie der Rollwiderstand unabhängig geändert werden.

Andererseits kann auch die Eigenschaften an einem seitlichen Ende des Laufstreifens sowohl auf die Bremseigenschaften als auf das Kurvenverhalten eines erfindungsgemäßen Fahrzeugreifens angepasst werden, während die Bremseigenschaften des mittleren Teils des Laufstreifens um den Reifenäquator des Fahrzeugluftreifens unabhängig davon angepasst werden können. Somit wird das Verhalten des Fahrzeugreifens in den Kurven durch das Anpassen der seitlichen Enden der Lauffläche eines Fahrzeugreifens und gleichzeitig das Bremsverhalten auf gerader Strecke verbessert. Ein erfindungsgemäßer Fahrzeugreifen ermöglicht somit eine noch zuvor unbekannte Optimierung eines Fahrzeugreifens, da die seitlichen Enden und die Mitte eines Laufstreifens unabhängig voneinander und punkt genau angepasst werden können. Diese Entkopplung stellt einen wesentlichen Beitrag der vorliegenden Erfindung dar und ist ein langersehntes Bedürfnis. Insbesondere wenn die erste Gummikomponente und die zweite Gummikomponente nicht ringförmig, sondern beispielsweise helix- oder spiralförmig sind oder nicht achsensymmetrisch um die Achse des Fahrzeugreifens verlaufen, treten verschiedene Probleme im Vergleich zu einem erfindungsgemäßen Fahrzeugluftreifen auf. Dies sind beispielsweise, dass das im Stand der Technik verwendete Herstellungsverfahren, insbesondere das verwendete Strip-Windung, häufig dazu führt, dass die Axialquerschnitte der ersten und zweiten Gummikomponente bestenfalls trapezförmig oder gar noch unregelmäßiger sind, wobei eine oder beide Seitenkanten des Trapezes eines besagten Axialquerschnittes einen Winkel mit der radialen Richtung von über 10° bilden und die Grundkanten des Trapezes parallel zur axialen Richtung verlaufen.

Es kommt zudem vor, dass durch das spiralförmige Aufwickeln keine Laufstreifen mit gleichförmigen Querschnitten gebildet werden können, da die Geometrie der ersten und zweiten Gummikomponente bei mit Strip-Winding hergestellten Reifen nicht so gut kontrolliert werden kann wie bei erfindungsgemäßen Fahrzeugreifen. Dies führt zu Abweichungen in den vorbestimmten Breiten und Höhen der ersten und zweiten Gummikomponente in den im Stand der Technik bekannten Reifen und somit zu den vorstehend beschriebenen trapezförmigen Axialquerschnitten der ersten und zweiten Gummikomponenten.

Somit können die vor- und nachstehend besprochenen Vorteile insbesondere dann erreicht werden, wenn die vorstehend beschriebene Kontrolle der genau definierten Breiten und Höhen der ersten und zweiten Gummikomponente eines erfindungsgemäßen Fahrzeugreifens eingestellt werden. Dies wird im Rahmen der vorliegenden Erfindung dadurch erreicht, dass die ersten und zweiten Gummikomponenten wie vorstehend beschrieben ringförmig ausgebildet sind. Erst die ringförmige Form gibt den einzelnen Gummikomponenten der ersten und zweiten Gummikomponente eine ausreichende Stabilität.

Die genau Kontrolle der Geometrie der ersten und zweiten Gummikomponente eines erfindungsgemäßen Fahrzeugreifens führt zudem auch dazu, dass die Kontaktfläche eines erfindungsgemäßen Fahrzeugreifens genau den Oberflächenanteil an erster und zweiter Gummikomponente aufweist, der durch die eingestellten Gewichtsanteile der ersten und zweiten Gummikomponente im Laufstreifenabschnitt des erfindungsgemäßen Fahrzeugreifens anvisiert wurden.

Ein erfindungsgemäßer Fahrzeugreifen ist wie vorstehend beschrieben oder wie vorstehend als bevorzugt beschrieben, wobei mindestens eine erste Gummikomponente und mindestens eine zweite Gummikomponente ringförmig sind und achsensymmetrisch um die Achse des Fahrzeugreifens verlaufen, bevorzugt sind sämtliche erste und zweiten Gummikomponenten ringförmig und verlaufen achsensymmetrisch um die Achse des Fahrzeugreifens, wobei die erste Gummikomponente aus einer erste Kautschukzusammensetzung besteht und die zweite Gummikomponente aus einer sich von der ersten Kautschukzusammensetzung unterscheidende zweite Kautschukzusammensetzung besteht.

Im Rahmen der vorliegenden Erfindung werden als Maß für die dynamische Steifigkeit im das dynamische Speichermodul bei 55°C und das dynamische Speichermodul bei -15°C herangezogen. Die dynamischen Speichermodule werden als über die Dehnung gemittelte dynamische Speichermodule aus einer dynamisch-mechanischen Messung mit einem Dehnungsdurchlauf (engl. "strain sweep") bei einer Vorkompression von 20% im Dehnungsbereich von 0,15% bis 8% und einer Frequenz von 10 Hz bei einer Temperatur von 55°C bzw. -15°C in Anlehnung an DIN 53512 bestimmt.

Im Rahmen der vorliegenden Erfindung beziehen sich die Begriffe "axiale Richtung", "radiale Richtung" und "Umfangsrichtung" auf die entsprechenden Dimensionen des Fahrzeugluftreifens.

Im Rahmen der vorliegenden Erfindung umfasst der Laufstreifen auch Reifenschultern und kann ein Laufstreifenabschnitt auch Reifenschultern umfassen. Zudem wird der Laufstreifen im Rahmen der vorliegenden Erfindung radial oberhalb durch die Lauffläche und radial unterhalb durch die nächstliegende Verstärkungslage begrenzt, wie nachstehend beispielsweise durch eine Gürtellage, Spulbandage oder Karkasslage beschrieben. Im Rahmen der vorliegenden Erfindung wird der Laufstreifen seitlich durch die Seitenwände des Fahrzeugluftreifens begrenzt.

Im Rahmen der vorliegenden Erfindung ist die Kontaktfläche eines Laufstreifens bevorzugt die Oberfläche des Laufstreifens, die bei einem regulären Abrollen des Reifens in unmittelbarem Kontakt mit dem Boden, besonders bevorzugt mit der Fahrbahn steht, sodass es sich um eine Bodenkontaktfläche bzw. Fahrbahnkontaktfläche handelt.

Bevorzugt ist ein erfindungsgemäßer Fahrzeugreifen wie vorstehend beschrieben, wobei die erste Gummikomponente eine erste Kautschukzusammensetzung aufweist und die zweite Gummikomponente eine zweite Kautschukzusammensetzung aufweist, wobei die zweite Gummikomponente andere dynamische Steifigkeitseigenschaften als die erste Gummikomponente aufweist, insbesondere andere Werte des dynamischen Speichermoduls E' bei -15°C und/oder bei 55 °C in Anlehnung an DIN 53 513 als die erste Gummikomponente. Unter dem Ausdruck "andere Werte des dynamischen Speichermoduls E' " sind solche Werte zu verstehen, die um maximal 2 MPa, bevorzugt um maximal 1 MPa, voneinander abweichen. Ein Fahrzeugluftreifen aufweisend einen solchen Laufstreifen ist somit bezüglich des Zielkonflikts zwischen Rollwiderstand und Schneehandling oder zwischen Schneehandling und Trockenhandling verbessert, wodurch er sich insbesondere hervorragend für den Einsatz unter winterlichen Fahrbedingungen eignet. Dies ist auch durch die nachstehenden experimentellen Beispiele belegt. Besonders bevorzugt ist es im Rahmen der vorliegenden Erfindung, wenn das dynamische Speichermodul E' bei -15°C und bei 55 °C gemäß DIN 53 513 bestimmt wird.

Ein erfindungsgemäßer Fahrzeugreifen ist wie vorstehend beschrieben, wobei der Fahrzeugreifen mindestens eine weitere Gummikomponente mit mindestens einer weiteren Kautschukzusammensetzung aufweist.

Ein erfindungsgemäßer Fahrzeugreifen ist wie vorstehend beschrieben, wobei die mindestens eine erste und die mindestens eine zweite Gummikomponente in dem einen Laufstreifenabschnitt in axialer Richtung zusätzlich so nacheinander angeordnet sind, dass auf eine zweite Gummikomponente eine erste Gummikomponente oder mindestens eine weitere Gummikomponente mit mindestens einer weiteren Kautschukzusammensetzung folgt.

Ein Vorteil des vorstehend beschriebenen Aspekts der vorliegenden Erfindung ist, dass je mehr unterschiedliche Gummikomponenten mit verschiedenen Kautschukzusammensetzungen in einem erfindungsgemäßen Fahrzeugreifen angeordnet werden, desto besser können die unterschiedlichen Anforderung für die verschiedenen Abschnitte eines Laufstreifens eines erfindungsgemäßen Fahrzeugreifens erreicht werden.

Bevorzugt ist ein erfindungsgemäßer Fahrzeugreifen wie vorstehend beschrieben oder wie vorstehend als bevorzugt beschrieben, wobei
- eine oder die Mehrzahl der ersten Gummikomponente und eine oder die Mehrzahl der zweiten Gummikomponente ringförmig ist und achsensymmetrisch um die Achse des Fahrzeugreifens verläuft
   oder
- sämtliche der ersten Gummikomponente und sämtliche der zweiten Gummikomponente ringförmig sind und achsensymmetrisch um die Achse des Fahrzeugreifens verlaufen.

Ein Vorteil des vorstehend beschriebenen Aspekts der vorliegenden Erfindung ist, dass erst durch das Erstellen ringförmiger erster und zweiter Gummikomponenten die Stabilität der Gummikomponenten so erhöht wurde, dass sie einen rechteckigen Querschnitt aufweisen, wobei Längserstreckung des Rechtsecks parallel zur radialen Richtung verläuft. Dies ist ein Grund, warum ein erfindungsgemäßer Fahrzeugreifen die vorstehend beschriebenen Vorteile über die aus dem Stand der Technik bekannten, mit Strip-Windung hergestellten Reifen aufweist. Diese im Stand der Technik bekannten Reifen weisen Nachteile auf, da sie die besagten trapezförmigen Querschnitte aufweisen, wobei eine oder beide Seitenkanten des Trapezes einen Winkel mit der radialen Richtung von über 10° bilden und die Grundkanten des Trapezes parallel zur axialen Richtung verlaufen.

Bevorzugt ist ein erfindungsgemäßer Fahrzeugreifen wie vorstehend beschrieben oder wie vorstehend als bevorzugt beschrieben, wobei der besagte Laufstreifenabschnitt die Cap und die Base des Laufstreifens oder nur die Cap des Laufstreifens des erfindungsgemäßen Fahrzeugreifen umfasst, wobei der Fahrzeugreifen bevorzugt keine Base im Laufstreifen umfasst.

Ein Vorteil des vorstehend beschriebenen Aspekts der vorliegenden Erfindung ist, dass insbesondere durch eine Multikomponenten-Cap mit einer ersten und zweiten Gummikomponente wie vorstehend beschrieben die Eigenschaften der Lauffläche eines erfindungsgemäßen Fahrzeugluftreifens angepasst werden können. Umfasst der Laufstreifenabschnitt eines erfindungsgemäßen Fahrzeugluftreifens zusätzlich auch eine Base, so hat dies den Vorteil, dass die Steifigkeit oder Härte der Base entlang der axialen Richtung variieren kann und somit an die gewünschten Ausführungen für die seitlichen Enden oder der Mitte des Laufstreifens eines erfindungsgemäßen Fahrzeugluftreifens angepasst werden kann.

Ein Vorteil des vorstehend beschriebenen Aspekts der vorliegenden Erfindung ist, dass die vorstehend beschriebenen Eigenschaften der ersten Gummikomponente dazu führen, dass die Bremseigenschaften sowie Kurvenverhalten auf schneebedeckten Fahrbahn verbessert werden kann.

Bevorzugt ist ein erfindungsgemäßer Fahrzeugreifen wie vorstehend beschrieben oder wie vorstehend als bevorzugt beschrieben, wobei die zweite Gummikomponente und die erste Gummikomponente die gleiche Shore-A-Härte nach DIN ISO 7619-1 aufweisen und/oder eine Shore-A-Härte nach DIN ISO 7619-1 im Bereich von 30 bis 80 Shore-A, bevorzugt im Bereich von 45 bis 70 Shore-A.

Ein Vorteil des vorstehend beschriebenen Aspekts der vorliegenden Erfindung ist, dass das dynamische Speichermodul geändert werden kann, obwohl die Härte des erfindungsgemäßen Fahrzeugreifen gleichbleibt. Daher können durch einen erfindungsgemäßen Fahrzeugreifen das Fahrverhalten auf trockener und schneebedeckter Fahrbahn, d.h. Trocken- und Schneehandling, gleichzeitig verbessert werden oder eines davon verbessert werden, während die andere Eigenschaft konstant gut bleibt.

Bevorzugt ist ein erfindungsgemäßer Fahrzeugreifen wie vorstehend beschrieben oder wie vorstehend als bevorzugt beschrieben, wobei
- das Verhältnis von dem dynamischen Speichermodul bei - 15° C in Anlehnung an DIN 53 513 der ersten Gummikomponente zum dynamischen Speichermodul bei - 15° C in Anlehnung an DIN 53 513 der zweiten Gummikomponente im Bereich von 0,025 bis 0,995 liegt, bevorzugt im Bereich von 0,3 bis 0,8, und/oder
- das Verhältnis von dem dynamischen Speichermodul bei 55° C in Anlehnung an DIN 53 513 der zweiten Gummikomponente zum dynamischen Speichermodul bei 55° C in Anlehnung an DIN 53 513 der ersten Gummikomponente im Bereich von 1,01 bis 1,90 liegt, bevorzugt im Bereich von 1,2 bis 1,7.

Ein Vorteil des vorstehend beschriebenen Aspekts der vorliegenden Erfindung ist, dass durch die unabhängige Einstellung der dynamischen Steifigkeit der ersten Gummikomponente und der zweiten Gummikomponente dazu führen, dass das Fahrverhalten, insbesondere die Bremseigenschaften sowie das Kurvenfahrverhalten, auf schneebedeckten und auf trockener Fahrbahn oder der Rollwiderstand zusammen mit dem Schneehandling verbessert werden kann.

Die vorstehend als bevorzugt beschriebenen Bereiche der zweiten Gummikomponente führen zu einem besseren Trockenfahrverhalten, d.h. dem Trockenhandling, also auf trockener Fahrbahn. Die vorstehend als bevorzugt beschriebenen Bereiche der ersten Gummikomponente führen zu einem besseren Schneefahrverhalten, d.h. dem Schneehandling, also auf schneebedeckter Fahrbahn aus. Durch die Möglichkeit beide Gummikomponenten unabhängig voneinander einzustellen können vorteilhafterweise sowohl Trockenfahrverhalten als auch Schneefahrverhalten eines erfindungsgemäßen Fahrzeugluftreifens verbessert werden. Ohne an eine wissenschaftliche Theorie gebunden sein zu wollen, wird davon ausgegangen, dass die weichen oder weniger steifen Zusammensetzungen der ersten Gummikomponenten die Traktion des Reifens auf Schnee und die steifen Zusammensetzungen der zweiten Gummikomponenten die Traktion des Reifens auf trockener Fahrbahn verbessern.

Die Verbesserung beider Eigenschaften konnte durch die standardisierten Tests zum Fahrverhalten auf trockener als auch auf schneebedeckter Fahrbahn gezeigt werden. Dabei können die erste und zweite Gummikomponente sowohl den oder die Laufstreifenabschnitte als auch weitere Abschnitte eines erfindungsgemäßen Fahrzeugluftreifens bilden oder mitbilden.

Bevorzugt ist ein erfindungsgemäßer Fahrzeugreifen wie vorstehend beschrieben oder wie vorstehend als bevorzugt beschrieben, wobei sich die Höhe des Laufstreifenabschnitts
- über 10 % der Breite des Laufstreifens, oder
- sich der Laufstreifenabschnitt über die gesamte Höhe des Laufstreifens erstreckt.

Bevorzugt ist ein erfindungsgemäßer Fahrzeugreifen wie vorstehend beschrieben oder wie vorstehend als bevorzugt beschrieben, wobei das Verhältnis an Gesamtgewicht der ersten Gummikomponenten aus der ersten Kautschukzusammensetzung zu dem Gesamtgewicht der zweiten Gummikomponenten aus der zweiten Kautschukzusammensetzung im Bereich von 4:1 bis 1:4 liegt, bevorzugt im Bereich von 2:1 bis 1,1:1.

Ein Vorteil des vorstehend beschriebenen Aspekts der vorliegenden Erfindung ist, dass durch die Variation des Verhältnisses der ersten und zweiten Gummikomponente der Laufstreifen oder ein oder mehrere Laufstreifenabschnitte ja nach Anforderung angepasst werden können. Eine solch genaue Einstellung ist nur durch den Einsatz eines erfindungsgemäßen Fahrzeugreifens mit einer ersten und zweiten Gummikomponente möglich.

Bevorzugt ist ein erfindungsgemäßer Fahrzeugreifen wie vorstehend beschrieben oder wie vorstehend als bevorzugt beschrieben, wobei die Höhen der verschiedenen ersten Gummikomponenten entlang der axialen Richtung und/oder die Höhen der verschiedenen zweiten Gummikomponenten entlang der axialen Richtung variieren.

Ein Vorteil des vorstehend beschriebenen Aspekts der vorliegenden Erfindung ist, dass die unterschiedlichen Anforderungen an die Laufstreifenoberfläche im Schulterbereich versus einem Bereich axial zwischen den Schulterbereichen, insbesondere der Laufstreifenmitte um den Reifenäquator, durch Variation der Höhen der ersten und zweiten und optional weiteren Gummikomponenten entlang der axialen Richtung angepasst werden können. Die ermöglicht eine gleichzeitige Optimierung des Kurven- und Bremsverhaltens auf trockener Fahrbahn und auf schneebedeckter Fahrbahn. Die Variation der Höhe verändert insbesondere die Steifigkeit des Laufstreifens oder des Profilblockelements an dieser Stelle. Somit kann die Steifigkeit durch Einstellung der Höhen der ersten und zweiten Gummikomponente an jedem Punkt entlang der axialen Richtung im Laufstreifen nach Belieben angepasst werden. Hierbei kann auch der Rollwiderstand zusammen mit dem Schneehandling verbessert werden.

Die vorstehend als bevorzugt beschriebenen Höhen und/oder Breiten der zweiten Gummikomponente führen zu einem besseren Trockenfahrverhalten, d.h. dem Trockenhandling, also auf trockener Fahrbahn. Die vorstehend als bevorzugt beschriebenen Höhen und/oder Breiten der ersten Gummikomponente führen zu einem besseren Schneefahrverhalten, d.h. dem Schneehandling, also auf schneebedeckter Fahrbahn aus. Durch die Möglichkeit, beide Gummikomponenten unabhängig voneinander einzustellen, können vorteilhafterweise sowohl Trockenfahrverhalten als auch Schneefahrverhalten eines erfindungsgemäßen Fahrzeugluftreifens verbessert werden. Ohne an eine wissenschaftliche Theorie gebunden sein zu wollen, wird davon ausgegangen, dass die weichen oder weniger steifen Zusammensetzungen der ersten Gummikomponenten die Traktion des Reifens auf Schnee und die steifen Zusammensetzungen der zweiten Gummikomponenten die Traktion des Reifens auf trockener Fahrbahn verbessern. Durch die Variation der Höhen und/oder Breiten der ersten und/oder zweiten Gummikomponente können die gewünschten Steifigkeiten des Laufstreifens oder der darauf befindlichen Profilblockelemente wie gewünscht und präziser als im Stand der Technik angepasst werden.

Die Verbesserung beider Eigenschaften konnte durch die standardisierten Tests zum Fahrverhalten auf trockener als auch auf schneebedeckter Fahrbahn gezeigt werden.

Dabei können die erste und zweite Gummikomponente sowohl den oder die Laufstreifenabschnitte als auch weitere Abschnitte eines erfindungsgemäßen Fahrzeugluftreifens bilden oder mitbilden.

Bevorzugt ist ein erfindungsgemäßer Fahrzeugreifen wie vorstehend beschrieben oder wie vorstehend als bevorzugt beschrieben, wobei die Breiten der verschiedenen ersten Gummikomponenten entlang der axialen Richtung und/oder die Breiten der verschiedenen zweiten Gummikomponenten entlang der axialen Richtung variieren.

Ein Vorteil des vorstehend beschriebenen Aspekts der vorliegenden Erfindung ist, dass die unterschiedlichen Anforderungen an die Laufstreifenoberfläche im Schulterbereich versus einem Bereich axial zwischen den Schulterbereichen, insbesondere der Laufstreifenmitte um den Reifenäquator, durch Variation der Breiten der ersten und zweiten und optional weiteren Gummikomponenten entlang der axialen Richtung angepasst werden können. Die ermöglicht eine gleichzeitige Optimierung des Kurven- und Bremsverhaltens auf trockener Fahrbahn und auf schneebedeckter Fahrbahn. Hierbei kann auch der Rollwiderstand zusammen mit dem Schneehandling verbessert werden.

Die vorstehend als bevorzugt beschriebenen Höhen und/oder Breiten der zweiten Gummikomponente führen zu einem besseren Trockenfahrverhalten, d.h. dem Trockenhandling, also auf trockener Fahrbahn. Die vorstehend als bevorzugt beschriebenen Höhen und/oder Breiten der ersten Gummikomponente führen zu einem besseren Schneefahrverhalten, d.h. dem Schneehandling, also auf schneebedeckter Fahrbahn aus. Durch die Möglichkeit beide Gummikomponenten unabhängig voneinander einzustellen können vorteilhafterweise sowohl Trockenfahrverhalten als auch Schneefahrverhalten eines erfindungsgemäßen Fahrzeugluftreifens verbessert werden. Ohne an eine wissenschaftliche Theorie gebunden sein zu wollen, wird davon ausgegangen, dass die weichen oder weniger steifen Zusammensetzungen der ersten Gummikomponenten die Traktion des Reifens auf Schnee und die steifen Zusammensetzungen der zweiten Gummikomponenten die Traktion des Reifens auf trockener Fahrbahn verbessern. Durch die Variation der Höhen und/oder Breiten der ersten und/oder zweiten Gummikomponente können die gewünschten Steifigkeiten des Laufstreifens oder der darauf befindlichen Profilblockelemente wie gewünscht und präziser als im Stand der Technik angepasst werden.

Die Verbesserung beider Eigenschaften konnte durch die standardisierten Tests zum Fahrverhalten auf trockener als auch auf schneebedeckter Fahrbahn gezeigt werden.

Dabei können die erste und zweite Gummikomponente sowohl den oder die Laufstreifenabschnitte als auch weitere Abschnitte eines erfindungsgemäßen Fahrzeugluftreifens bilden oder mitbilden.

Bevorzugt ist ein erfindungsgemäßer Fahrzeugreifen wie vorstehend beschrieben oder wie vorstehend als bevorzugt beschrieben, wobei
- die Breite einer oder jeder einzelnen ersten Gummikomponenten entlang der radialen Richtung variiert
   und/oder
- die Breite einer oder jeder einzelnen zweiten Gummikomponenten entlang der radialen Richtung variiert.

Ein Vorteil des vorstehend beschriebenen Aspekts der vorliegenden Erfindung ist, dass der Anteil der steiferen Gummikomponente des Laufstreifenabschnitts mit längerem Gebrauch abnimmt und gleichzeitig mit längerem Gebrauch die kleiner werdenden, verbleibenden Profilblockelemente auf dem Laufstreifenabschnitt steifer werden. Hierdurch können vorteilhafterweise Profilblockelemente auf einem erfindungsgemäßen Fahrzeugluftreifen hergestellt werden, welche über ihre Lebensdauer eine annährend konstante Steifigkeit aufweisen. Dies gilt insbesondere für Sommer-Fahrzeugluftreifen.

Im Rahmen der vorliegenden Erfindung ist ein Profilblockelement ein Abschnitt auf dem Laufstreifenabschnitt eines erfindungsgemäßen Fahrzeugluftreifens, welcher von den Hauptumfangsrillen und/oder weiteren Rillen in dem Laufstreifenabschnitt begrenzt wird. Bevorzugt ist ein erfindungsgemäßer Fahrzeugreifen wie vorstehend beschrieben oder wie vorstehend als bevorzugt beschrieben, wobei in der Mitte des Querschnitts des Laufstreifens die Breiten der ersten Gummikomponenten größer sind als die Breiten der zweiten Gummikomponenten.

Die vorstehend als bevorzugt beschriebenen Breiten der ersten und/oder zweiten Gummikomponente führen zu einem besseren Fahrverhalten in Kurven und beim Bremsen auf gerader Fahrbahn. Durch die Möglichkeit, die Breiten der beiden Gummikomponenten unabhängig voneinander in den unterschiedlichen Bereichen des Laufstreifens einzustellen, können vorteilhafterweise sowohl Trockenfahrverhalten als auch Schneefahrverhalten eines erfindungsgemäßen Fahrzeugluftreifens verbessert werden. Ohne an eine wissenschaftliche Theorie gebunden sein zu wollen, wird davon ausgegangen, dass die weichen oder weniger steifen Zusammensetzungen der ersten Gummikomponenten die Traktion des Reifens auf Schnee und die steifen Zusammensetzungen der zweiten Gummikomponenten die Traktion des Reifens auf trockener Fahrbahn verbessern. Durch die Variation der Breiten der ersten und/oder zweiten Gummikomponente können die gewünschten Steifigkeiten in den besagten seitlichen oder mittigen Bereichen des Laufstreifens wie gewünscht und präziser als im Stand der Technik angepasst werden.

Bevorzugt ist ein erfindungsgemäßer Fahrzeugreifen wie vorstehend beschrieben oder wie vorstehend als bevorzugt beschrieben, wobei an den Seiten des Querschnitts des Laufstreifens die Breiten der ersten Gummikomponenten kleiner sind als die Breiten der zweiten Gummikomponenten.

Die vorstehend als bevorzugt beschriebenen Breiten der ersten und/oder zweiten Gummikomponente führen zu einem besseren Fahrverhalten über die gesamte Lebensdauer eines erfindungsgemäßen Fahrzeugluftreifens, da durch die in radialer Richtung ab- oder zunehmenden Breiten der ersten und/oder zweiten Gummikomponente die gewünschten Steifigkeiten in den besagten oder in den seitlichen oder mittigen Bereichen des Laufstreifens wie gewünscht und präziser als im Stand der Technik angepasst werden können.

Durch die Möglichkeit, die Breiten der beiden Gummikomponenten unabhängig voneinander in den unterschiedlichen Bereichen des Laufstreifens einzustellen, können vorteilhafterweise sowohl Trockenfahrverhalten als auch Schneefahrverhalten eines erfindungsgemäßen Fahrzeugluftreifens über die gesamte Lebensdauer eines erfindungsgemäßen Fahrzeugluftreifens verbessert werden. Ohne an eine wissenschaftliche Theorie gebunden sein zu wollen, wird davon ausgegangen, dass die weichen oder weniger steifen Zusammensetzungen der ersten Gummikomponenten die Traktion des Reifens auf Schnee und die steifen Zusammensetzungen der zweiten Gummikomponenten die Traktion des Reifens auf trockener Fahrbahn verbessern.

Bevorzugt ist ein erfindungsgemäßer Fahrzeugreifen wie vorstehend beschrieben oder wie vorstehend als bevorzugt beschrieben, wobei an den Seiten oder in der Mitte des Querschnitts des Laufstreifens das Verhältnis an Gesamtgewicht der Gummikomponenten aus der ersten Kautschukzusammensetzung zu dem Gesamtgewicht der Gummikomponenten aus der zweiten Kautschukzusammensetzung im Bereich von 4:1 bis 1:4 liegt, bevorzugt im Bereich von 2:1 bis 1,1:1.

Die vorstehend als bevorzugt beschriebenen Breiten der ersten und/oder zweiten Gummikomponente führen zu einem besseren Fahrverhalten in Kurven und beim Bremsen auf gerader Fahrbahn. Durch die Möglichkeit, die Breiten der beiden Gummikomponenten unabhängig voneinander in den unterschiedlichen Bereichen des Laufstreifens einzustellen, können vorteilhafterweise sowohl Trockenfahrverhalten als auch Schneefahrverhalten eines erfindungsgemäßen Fahrzeugluftreifens verbessert werden. Ohne an eine wissenschaftliche Theorie gebunden sein zu wollen, wird davon ausgegangen, dass die weichen oder weniger steifen Zusammensetzungen der ersten Gummikomponenten die Traktion des Reifens auf Schnee und die steifen Zusammensetzungen der zweiten Gummikomponenten die Traktion des Reifens auf trockener Fahrbahn verbessern. Durch die Variation der Breiten der ersten und/oder zweiten Gummikomponente können die gewünschten Steifigkeiten in den besagten seitlichen oder mittigen Bereichen des Laufstreifens wie gewünscht und präziser als im Stand der Technik angepasst werden.

Bevorzugt aus den Gründen zum vorstehenden Aspekt ist ein erfindungsgemäßer Fahrzeugreifen wie vorstehend beschrieben oder wie vorstehend als bevorzugt beschrieben, wobei
- an den Seiten Querschnitts des Laufstreifens die Breiten der ersten Gummikomponenten größer sind als die Breiten der ersten Gummikomponenten in der Mitte des Querschnitts des Laufstreifens
   und/oder
- an den Seiten Querschnitts des Laufstreifens die Breiten der zweiten Gummikomponenten größer sind als die Breiten der zweiten Gummikomponenten in der Mitte des Querschnitts des Laufstreifens.

Im Rahmen der vorliegenden Erfindung bezeichnet der Ausdruck "Seiten des Querschnitts des Laufstreifens" die seitlichen Enden oder die Flanken des Fahrzeugreifens, welche bevorzugt von den zwei äußersten Hauptumfangsrillen eines erfindungsgemäßen Fahrzeugreifens begrenzt werden.

Im Rahmen der vorliegenden Erfindung bezeichnet der Ausdruck "Mitte des Querschnitts des Laufstreifens" den Bereich zwischen den seitlichen Enden oder den Flanken des Fahrzeugreifens, welcher bevorzugt von den zwei äußersten Hauptumfangsrillen eines erfindungsgemäßen Fahrzeugreifens begrenzt wird. Umfasst ein erfindungsgemäßer Fahrzeugreifen drei oder mehr Hauptumfangsrillen, so werden solche Hauptumfangsrillen, welche nicht die zwei äußersten bilden, als innenliegende Hauptumfangsrillen bezeichnet.

### Figurenbeschreibung:

Es zeigt:
   - Figur 1:: Radialschnittansicht eines erfindungsgemäßen Fahrzeugluftreifens;
   - Figur 2:: Querschnitt eines schematisch dargestellten Laufstreifenabschnitts eines erfindungsgemäßen Fahrzeugreifens in einer weiteren Ausführungsform;
   - Figur 3:: Querschnitt eines schematisch dargestellten Laufstreifenabschnitts eines erfindungsgemäßen Fahrzeugluftreifens in einer weiteren Ausführungsform;
   - Figur 4:: Querschnitt eines schematisch dargestellten Laufstreifenabschnitts eines erfindungsgemäßen Fahrzeugreifens in einer weiteren Ausführungsform;
   - Figur 5:: Querschnitt eines schematisch dargestellten Laufstreifenabschnitts eines erfindungsgemäßen Fahrzeugreifens in einer weiteren Ausführungsform;
   - Figur 6:: Querschnitt eines schematisch dargestellten Laufstreifenabschnitts eines erfindungsgemäßen Fahrzeugreifens in einer weiteren Ausführungsform;
   - Figur 7:: Röntgenaufnahme eines Axialquerschnitts eines Laufstreifens eines erfindungsgemäßen Fahrzeugreifens mit helixförmigen, d.h. nicht ringförmigen, ersten und zweiten Gummikomponenten, wobei der gezeigte Fahrzeugluftreifen mit dem vorstehend beschriebenen und im Stand der Technik bekannten Strip-Winding-Verfahren hergestellt wurde;
   - Figur 8:: Röntgenaufnahme eines Axialquerschnitts eines Laufstreifens eines erfindungsgemäßen Fahrzeugreifens mit ringförmigen ersten und zweiten Gummikomponenten.

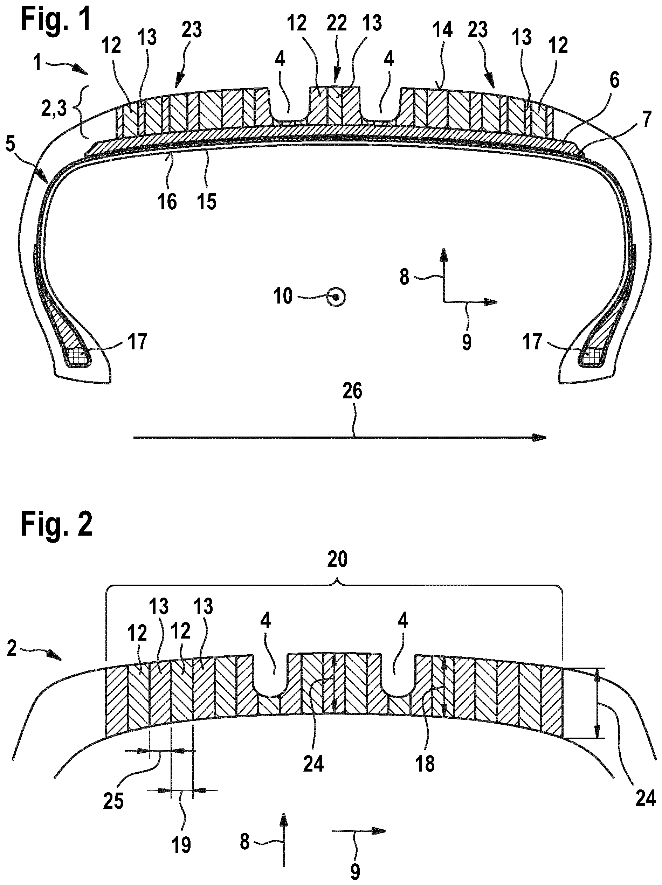

Figur 1 zeigt eine schematische Darstellung einer Radialschnittansicht eines erfindungsgemäßen Fahrzeugluftreifens 1 mit zwei Reifenwülsten 17, einer Karkasse 5, zwei Umfangsrillen 4 und einem Laufstreifen 2 mit einer Cap 3 und ohne Base. Der Laufstreifen 2 ist durch die zwei Umfangsrillen 4 in die Mitte 22 und Flanken 23 des Laufstreifens 2 geteilt. Laufstreifen 2 wird durch eine Lauffläche 14 und durch eine Gürtellage 6 begrenzt. Zwischen der Karkasse 5 und der Gürtellage 6 ist zudem eine Spulbandagenlage 7 angeordnet. Der Laufstreifen 2 weist eine erste Gummikomponente 12 und eine zweite Gummikomponente 13 auf, welches in axiale Richtung 9 alternierend nacheinander angeordnet sind. Zudem umfasst der Fahrzeugluftreifen 1 eine Reifeninnenfläche 16 und einen Innerliner 15.

Figur 2 zeigt eine schematische Darstellung eines Querschnitts eines Laufstreifenabschnitts eines erfindungsgemäßen Fahrzeugreifens in einer weiteren Ausführungsform. Erkennbar ist in Figur 2, dass die verschiedenen ersten Gummikomponenten 12 entlang der Breite 20 des Laufstreifens 2, d.h. entlang der axialen Richtung 9, alle die gleiche Breite 19, jedoch verschiedene Höhen 18 aufweisen. Auch erkennbar ist, dass die verschiedenen zweiten Gummikomponenten 13 entlang der Breite 20 des Laufstreifens 2, d.h. entlang der axialen Richtung 9, alle die gleiche Breite 25, jedoch verschiedene Höhen 24 aufweisen. Zudem ist die Breite 19 jeder ersten Gummikomponente 12 die gleiche, wie die Breite 25 jeder zweiten Gummikomponente 13. Ein erfindungsgemäßer Fahrzeugluftreifen mit einem in Figur 2 dargestellten Laufstreifen 2 weist wie nachstehend in den experimentellen Beispielen beschrieben bereits vorteilhafte technische Effekte auf.

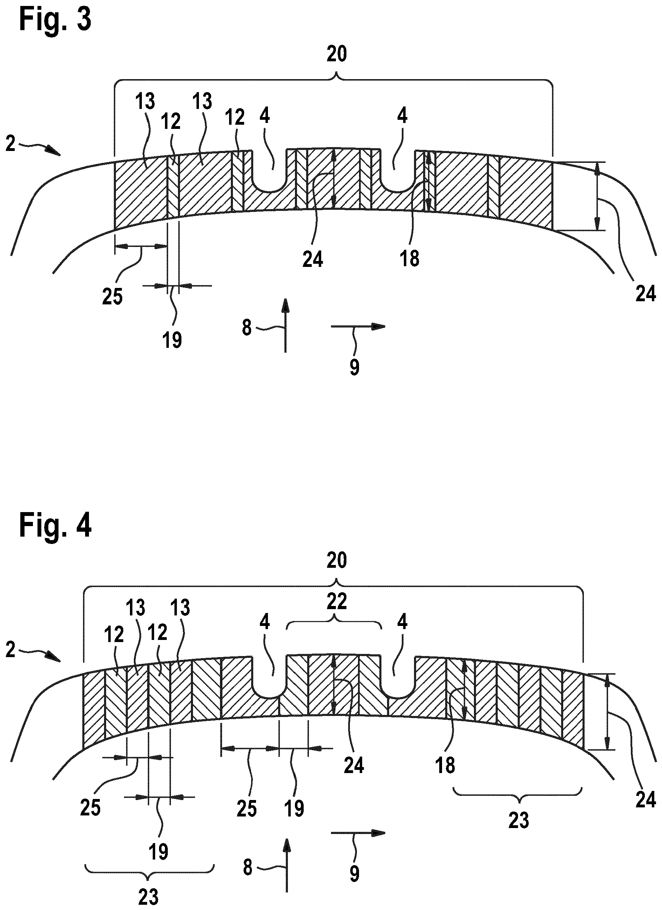

Figur 3 zeigt eine schematische Darstellung eines Querschnitts eines Laufstreifens eines erfindungsgemäßen Fahrzeugreifens in einer weiteren Ausführungsform. Erkennbar ist in Figur 3, dass die verschiedenen ersten Gummikomponenten 12 entlang der axialen Richtung 9 alle die gleiche Breite 19, jedoch verschiedene Höhen 18 aufweisen. Auch erkennbar ist, dass die verschiedenen zweiten Gummikomponenten 13 entlang der axialen Richtung 9 alle die gleiche Breite 25, jedoch verschiedene Höhen 24 aufweisen. Zudem ist die Breite 19 jeder ersten Gummikomponente 12 kleiner als die Breite 25 jeder zweiten Gummikomponente 13.

Figur 4 zeigt eine schematische Darstellung eines Querschnitts eines Laufstreifens eines erfindungsgemäßen Fahrzeugreifens in einer weiteren Ausführungsform. Erkennbar ist in Figur 4, dass nicht sämtliche erste Gummikomponenten 12 entlang der axialen Richtung 9 die gleiche Breite 19 und die gleiche Höhe 18 aufweisen. Auch erkennbar ist, dass nicht sämtliche zweite Gummikomponenten 13 entlang der axialen Richtung 9 die gleiche Breite 25 und die gleiche Höhe 24 aufweisen.

Zudem ist die Breite 19 jeder ersten Gummikomponente 12 in dem einen seitlichen Ende 23 des Laufstreifens 2 die gleiche wie in dem anderen seitlichen Ende 23. Dies gilt entsprechend für die zweite Gummikomponente 13.

Zudem ist die Breite 19 jeder ersten Gummikomponente 12 in der Mitte 22 des Laufstreifens 2 die gleiche, wie die Breite 25 jeder zweiten Gummikomponente 13 in der Mitte 22 des Laufstreifens.

Die Breiten 25, 19 der ersten und zweiten Gummikomponente 12, 13 an den seitlichen Enden 23 des Laufstreifens 2 sind jedoch kleiner als in der Mitte 22 des Laufstreifens 2. Ein Laufstreifen 2 eines erfindungsgemäßen Fahrzeugluftreifens, wie in Figur 4 gezeigt, weist aus den vorstehend erörterten Gründen ein besseres Fahrverhalten beim Bremsverhalten und gleichzeitig in der Kurvenlage auf, als Laufstreifen erfindungsgemäßer Fahrzeugluftreifen wie in Figur 2 oder in Figur 3 gezeigt, wenn die erste und zweite Gummikomponente 12, 13 wie vorstehend beschrieben oder wie vorstehend als bevorzugt oder besonders bevorzugt beschrieben gewählt werden.

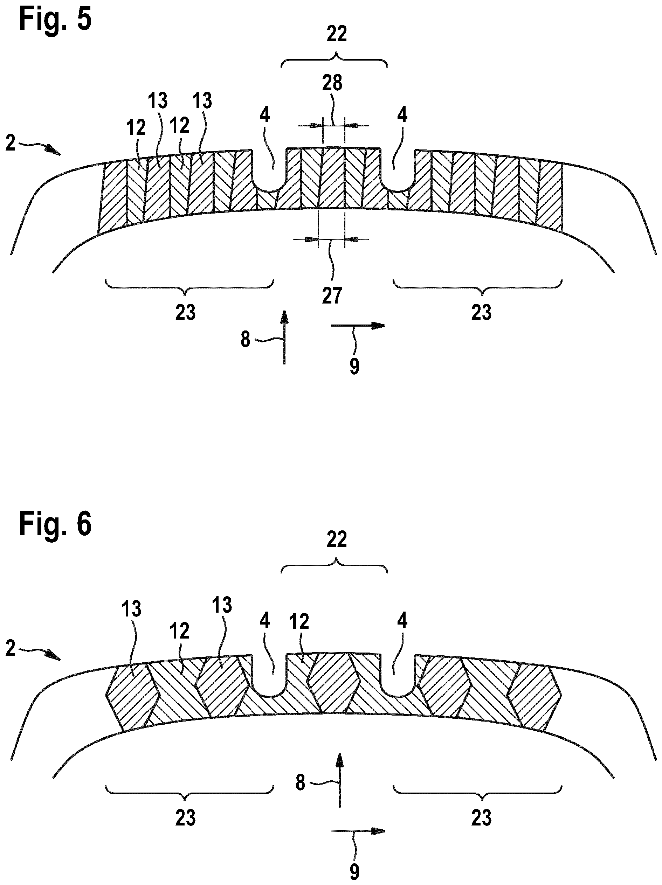

Figur 5 zeigt eine schematische Darstellung eines Querschnitts eines Laufstreifens eines erfindungsgemäßen Fahrzeugreifens in einer weiteren Ausführungsform. Erkennbar ist in Figur 5, dass jede der ersten Gummikomponenten 12 eine sich in radialer Richtung 8 variierende Breite aufweist, wobei die Breite einer jeden ersten Gummikomponenten 12 nach radial innen, also entgegen der radialen Richtung 8, abnimmt.

Auch erkennbar ist, dass jede der zweiten Gummikomponenten 13 entlang der axialen Richtung 9 eine sich in radialer Richtung 8 variierende Breite aufweist, wobei die Breite einer jeden ersten Gummikomponenten 13 nach radial außen, also in radialer Richtung 8, abnimmt. Das heißt, dass die Breite 28 der zweiten Gummikomponenten 13 an der Lauffläche 14 kleiner ist als die Breite 27 der zweiten Gummikomponenten 13 an der gegenüberliegenden Seite des Laufstreifenabschnitts 2, wobei zweite Gummikomponente 13 bevorzugt weicher oder weniger steif ist als die erste Gummikomponente 12.

Zudem ist die Variation der Breite 19 der ersten Gummikomponenten 12 in dem einen seitlichen Ende 23 des Laufstreifens 2 eine andere als die Variation der Breite 19 der ersten Gummikomponenten 12 in dem anderen seitlichen Ende 23. Dies gilt entsprechend für die zweite Gummikomponente 13. Auf diese Weise kann das Kurvenfahrverhaltens des Fahrzeugluftreifens vorteilhafterweise geändert werden, ohne das Bremsverhalten auf gerader Strecke zu entsprechend zu beeinflussen. Somit ist eine Entkopplung von Kurvenfahrverhalten und Bremsweg auf gerader Strecke möglich.

Figur 6 zeigt eine schematische Darstellung eines Querschnitts eines Laufstreifens eines erfindungsgemäßen Fahrzeugreifens in einer weiteren Ausführungsform. Erkennbar ist in Figur 6, dass jede der ersten Gummikomponenten 12 eine sich in radialer Richtung 8 variierende Breite aufweist, wobei die Breite einer jeden zweiten Gummikomponenten 13 nach radial innen, also entgegen der radialen Richtung 8, bis zur halben Höhe des Laufstreifenabschnittes 2 abnimmt und danach bis zum der Lauffläche 14 gegenüberliegenden Seite des Laufstreifenabschnittes 2 zunimmt. Entsprechend gegensätzliches gilt für die ersten Gummikomponenten 12.

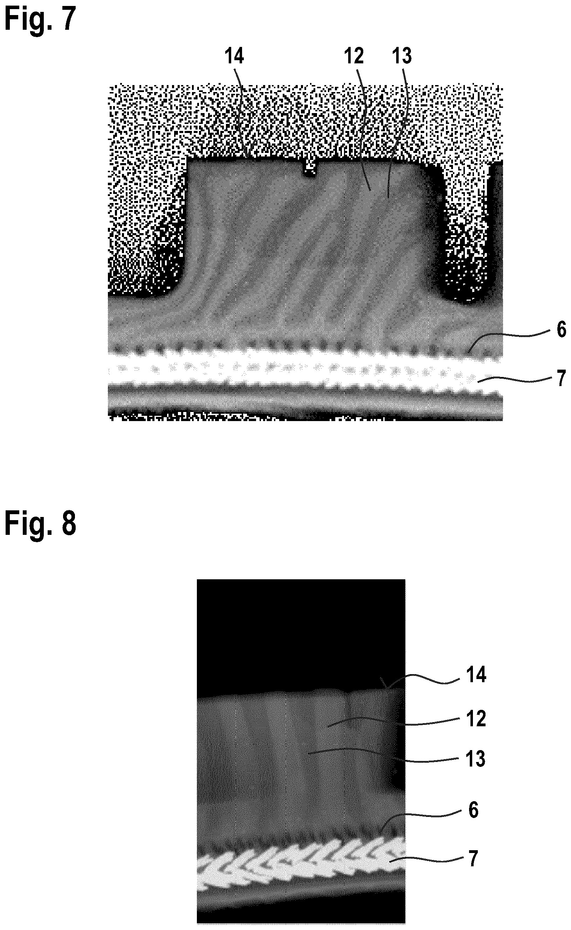

Figur 7 zeigt eine Röntgenaufnahme eines Axialquerschnitts eines Laufstreifenabschnitts 2 eines nicht-erfindungsgemäßen Fahrzeugreifens mit helixförmigen, d.h. nicht ringförmigen, ersten und zweiten Gummikomponenten 1, 2, wobei der gezeigte Fahrzeugluftreifen mit dem vorstehend beschriebenen und im Stand der Technik bekannten Strip-Winding-Verfahren hergestellt wurde. Es ist klar erkennbar, dass die Geometrie der ersten und zweiten Gummikomponenten 1, 2 nicht so gut kontrolliert werden kann und auch die Lauffläche 14 nicht das gewünschte Verhältnis der Oberflächenanteile an erster und zweiter Gummikomponenten 1, 2 aufweist. Gezeigt ist auch die Spulbandagenlage 6 und die Gürtellage 7 des nicht-erfindungsgemäßen Fahrzeugreifens.

Figur 8 zeigt eine Röntgenaufnahme eines Axialquerschnitts eines Laufstreifenabschnitts 2 eines erfindungsgemäßen Fahrzeugreifens mit ringförmigen ersten und zweiten Gummikomponenten 1, 2, wobei der gezeigte Fahrzeugluftreifen mit dem neuartigen Extrusionsverfahren hergestellt wurde, bei dem Endlos-Streifen mit in Extrusionsrichtung parallel verlaufenden verschiedenen Gummikomponenten hergestellt werden können.

Dieses Extrusionsverfahren verwendet dabei eine dem Fachmann bekannte Zebra-Leiste und die dazu gehörigen bekannten Prozessparameter. Es ist klar erkennbar, dass die Geometrie der ersten und zweiten Gummikomponenten 1, 2 gut kontrolliert werden kann und auch die Lauffläche 14 das gewünschte Verhältnis der Oberflächenanteile an erster und zweiter Gummikomponenten 1, 2 aufweist. Das gewünschte Verhältnis an Oberflächenanteile an erster und zweiter Gummikomponenten entspricht erfindungsgemäß stets dem Gewichtsanteil der ersten und zweiten Gummikomponenten im Laufstreifens eines erfindungsgemäßen Fahrzeugreifens. Gezeigt ist auch die Spulbandagenlage 6 und die Gürtellage 7 des erfindungsgemäßen Fahrzeugreifens.

### Experimentelle Daten:

### Messmethoden

1. Shore-A Härte
   Die Härten werden nach DIN ISO 7619-1 (Shore-A-Härte) bei RT bestimmt. Als Maß für die semidynamische Steifigkeit dient der Spannungswert bei 300% statischer Dehnung bei Raumtemperatur gemäß DIN 53504 ("D 300% ").
2. Dynamisches Speichermodul E' bei 55 °C und bei -15 °C
   Als Maß für die dynamische Steifigkeit werden im Rahmen der Erfindung das dynamische Speichermodul bei 55°C und das dynamische Speichermodul bei -15°C herangezogen. Die dynamischen Speichermodule werden als über die Dehnung gemittelte dynamische Speichermodule aus einer dynamisch-mechanischen Messung mit einem Dehnungsdurchlauf (engl. "strain sweep") bei einer Vorkompression von 20% im Dehnungsbereich von 0,15% bis 8% und einer Frequenz von 10 Hz bei einer Temperatur von 55°C bzw. -15°C in Anlehnung an DIN 53512 bestimmt.
3. Rollwiderstand
   Die Ergebnisse wurden in Anlehnung an die Methode ISO 28580 ermittelt.
4. Fahrverhalten auf trockener oder auf schneebedeckter Fahrbahn
   Bei dem Test "Fahrverhalten" wird herausgefunden, ob ein Fahrzeug im Zusammenhang mit Fahrbahnbelag und Wetterbedingungen eine gute Bodenhaftung und eine gute Bremskraft aufweist. Die erfindungsgemäße Fahrzeugreifen mit einer üblichen Reifengröße von 205/55 R16 wurden auf ein mit ABS ausgestattetes Fahrzeug der Marke Volvo, Modell V60 T6R montiert. Sowohl die Vorderreifen als auch die Hinterreifen wurden auf einen Luftdruck von 230 kPa aufgepumpt.
   Das jeweilige Fahrverhalten wurde auf trockener Asphaltstraßenoberfläche oder auf einer Asphaltstraßenoberfläche mit einer Schneetiefe von 2 bis 3 mm ermittelt.
   Dabei wurden das Geradeaus-Fahren, das Lenkverhalten, die Seitenführung der Hinterachse, der Fahrspurwechsel und der Grip der Reifen bewertet und als Indexwerte erfasst und in Vergleichswerte umgerechnet. Hierbei bedeuten Werte mit <100% eine Verschlechterung der jeweiligen Eigenschaft, d.h. schlechteres Fahrverhalten, und Werte mit > 100% eine Verbesserung, d.h. besseres Fahrverhalten, zugeordnet.
   Die vorstehend beschriebene Testmethode zum Fahrverhalten der hergestellten Reifen ist dem Fachmann auch als "ADAC Reifentest" bekannt und ist beim ADAC mit der Methodennummer "07.03.2900" oder "IN 26272" in den Abschnitten "Fahreigenschaften auf trockener Straße" und "Schnee (nur bei Winterreifen)" beschrieben.

### Herstellung der Fahrzeugluftreifen:

### Kautschukzusammensetzungen:

**Tabelle 1: Mischungsbestandteile der zur Herstellung eines erfindungsgemäßen Fahrzeugluftreifens verwendeten Kautschukmischungen und deren Eigenschaften**

| **Bestandteil** | **Einheit** | **Mischstufe** | **Compound A** | **Compound B** |
|---|---|---|---|---|
| NR | phr | 1 | 38 | 38 |
| BR | phr | 1 | 50 | 50 |
| SBR | phr | 1 | 12 | 12 |
| Ruß | phr | 1 | 10 | 14 |
| Silica | phr | 1 | 73 | 108 |
| Weichmacher^{b)} | phr | 1 | 60 | 55 |
| Silan | phr | 1 | 6,5 | 10,2 |
| Zusatzstoffe^{a)} | phr | 1 | 10 | 10,2 |
| Schwefel und Beschleuniger CBS | phr | 2 | 7 | 6,4 |
| | | | | |

| **Physikalische Eigenschaften** | | **Einheit** | **Compound A** | **Compound B** |
|---|---|---|---|---|
| | | | | |
| Dynamisches Speichermodul E' des jeweiligen Compounds bei -15°C | | MPa | 9 | 16 |
| Dynamisches Speichermodul E' des jeweiligen Compounds bei +55°C | | MPa | 3,8 | 5 |

| | | | | |
|---|---|---|---|---|
| a) Zusatzstoffe: Alterungsschutzmittel 6PPD, Zinkoxid, Stearinsäure b) TDAE Prozessöl | | | | |

Die Herstellung der verwendeten Kautschukmischung zur Herstellung der erfindungsgemäßen Fahrzeugluftreifen erfolgt nach dem in der Kautschukindustrie üblichen Verfahren, bei dem zunächst in einer ersten Mischstufe eine Grundmischung mit allen Bestandteilen wie in Tabelle 1 angegeben hergestellt wird. Durch Zugabe des Vulkanisationssystems wie in Tabelle 1 angegeben in einer zweiten Mischstufe wird aus der Grundmischung eine Fertigmischung erzeugt. Die Fertigmischung wird dann durch ein bekanntes Extrusionsverfahren zur Cap eines Laufstreifens ohne Base extrudiert. Hierbei wird für die Extrusion des Laufstreifens des erfindungsgemäßen Fahrzeugluftreifens ein Vor- und Endschablonensystem
- mit zwei Eingängen je für Compound A und Compound B
   und
- mit 26 rechteckigen Ausgängen verwendet,
sodass ein Endlosstreifen für eine Cap mit einem Querschnitt wie in Figur 1 gezeigt resultierte, wobei der Endlosstreifen alternierend 13 Streifen des Compounds A und 13 Streifen des Compounds B aufwies. Die verwendete Vorleiste des vorstehend beschriebenen Vor- und Endschablonensystems ist dem Fachmann auch als "Zebra-Leiste" bekannt und dem Fachmann ist in diesem Zusammenhang auch das verwendete Extrusionsverfahren mit einer Zebraleiste bekannt.
Anschließend wurde der Endlosstreifen in die für den zu testenden erfindungsgemäßen Fahrzeugluftreifen geeignete Größe geschnitten.

Wenn ein nicht-erfindungsgemäßer Referenzreifen hergestellt wurde, so wurde für die Extrusion des Laufstreifens des Referenzreifens das gleiche Vor- und Endschablonensystem wie vorstehend für einen erfindungsgemäßen Fahrzeugluftreifen beschreiben verwendet, jedoch wurde in beide Eingänge der gleiche Compound geleitet, sodass
- beim ersten Mal ein Endlosstreifen mit 26 parallelen, nur aus Compound A bestehenden Streifen für die Cap des nachstehenden Referenzreifens 1
   und
- ein anderes Mal ein Endlosstreifen mit 26 parallelen, nur aus Compound B bestehenden Streifen für die Cap des nachstehenden Referenzreifens 2
hergestellt wurden.

Der Endlosstreifen, welcher nur Streifen aus Compound A umfasste, wurde in die gleiche Größe wie die vorstehend beschriebenen Cap für den erfindungsgemäßen Fahrzeugluftreifen geschnitten und dann wie folgt zu dem Referenzreifen 1 weiterverarbeitet. Der Endlosstreifen, welcher nur Streifen aus Compound B umfasste, wurde in die gleiche Größe wie die vorstehend beschriebenen Cap für den erfindungsgemäßen Fahrzeugluftreifen geschnitten und dann wie folgt zu dem Referenzreifen 2 weiterverarbeitet.

Zusammen mit weiteren nötigen standardmäßigen Rohreifenbestandteilen wurden die jeweiligen zugeschnittenen Laufstreifen zu einem Reifenrohling weiterverarbeitet, welcher dann in eine entsprechende Vulkanisationsform gebracht wurde.

Anschließend erfolgt die Herstellung der Referenzreifen oder des erfindungsgemäßen Fahrzeugluftreifens durch die finale Vulkanisation, wobei aufgrund des im Rahmen der vorliegenden Erfindung zugegebenen Vulkanisationssystems eine Schwefelvernetzung stattfindet. Die Eigenschaften
- des resultierenden Referenzreifens 1 mit ausschließlich Compound A im Laufstreifen,
- des resultierenden Referenzreifens 2 mit ausschließlich Compound B im Laufstreifen, und
- des resultierenden erfindungsgemäßen Fahrzeugluftreifens mit alternierenden Compounds A und B im Laufstreifen,
sind in Tabelle 2 zusammengefasst.

### Ergebnisse:

**Tabelle 2: Eigenschaften eines erfindungsgemäßen Fahrzeugluftreifens**

| **Reifeneigenschaften** | Laufstreifen nur mit Compound A (Ref.-Reifen 1) | Laufstreifen nur mit Compound B (Ref.-Reifen 2) | Zebra-Lauftstreifen mit Compound A und Compound B |
|---|---|---|---|
| | Nicht -erfindung. | Nicht -erfindung. | Erfindungsgemäß |
| Dynamisches Speichermodul E' des jeweiligen Compounds bei -15°C (MPa) | 9 | 16 | Nicht ermittelbar |
| Dynamisches Speichermodul E' des jeweiligen Compounds bei +55°C (MPa) | 3,8 | 5 | Nicht ermittelbar |
| Reifengröße | 205/55 R16 | 205/55 R16 | 205/55 R16 |
| Gewichtsverhältnis von Compound A zu Compound B | 1:0 | 0:1 | 1:1 |
| Anzahl Streifen aus Compound A* | 26 | 0 | 13 |
| Anzahl Streifen aus Compound B* | 0 | 26 | 13 |

| **Relative Reifenperformance** | | | |
|---|---|---|---|
| Rollwiderstand (%) | 100 | 93 | 97 |
| Fahrverhalten auf Schnee (%) | 100 | 103 | 106 |
| Fahrverhalten auf trockener Fahrbahn (%) | 100 | 110 | 107 |

| | | | |
|---|---|---|---|
| * Alle Streifen wiesen die gleiche Breite auf. | | | |

Die ermittelten Werte für die in Tabelle 2 angeführten Reifeneigenschaften wurden in Performance (Leistung) umgerechnet, wobei der Referenzreifen 1 bei jeder getesteten Reifeneigenschaft auf 100% Performance normiert wurde und die Eigenschaften des Referenzreifen 2 sowie des erfindungsgemäß ausgeführten Reifens relativ zum Referenzreifen 1 angegeben werden. Hierbei bedeuten Werte <100% eine Verschlechterung der jeweiligen Eigenschaft, während Werte > 100% eine Verbesserung darstellen.

Referenzreifen 1, deren Cap-Mischung mit Compound A eine niedrigere dynamische Steifigkeit E' als die des Referenzreifens 2 aufweist, stellt den Bezugspunkt für die durchgeführten Experimente dar, d.h. die Messwerte wurden auf 100% normiert. Referenzreifen 2, deren Cap-Mischung mit Compound B eine höhere dynamische Steifigkeit E' als die des Referenzreifens 1 aufweist, weist im Vergleich zu Referenzreifen 1 ein besseres Fahrverhalten auf schneebedeckter Straße aber auch einen höheren Rollwiderstand auf. Die Streifen mit Compound A, die niedrigere dynamische Steifigkeit E' (-15°C) als Compound B aufweisen, führt hierbei zu einer deutlichen und unerwarteten Verbesserung des Fahrverhaltens auf Schnee gegenüber beiden Referenzreifen, da nicht ein Werte von 101,5 % (dies entspricht dem Mittelwert der beiden Referenzreifen 1 und 2), sondern sogar ein Wert von 106 % (vgl. Performance des erfindungsgemäßen Reifens auf schneebedeckter Fahrbahn) erreicht wurde.

Dies verdeutlicht den zu lösenden Zielkonflikt gemäß der Aufgabe der vorliegenden Erfindung, da eine einzige Gummikomponente oder ein einziger Compound nicht gleichzeitig das Fahrverhalten auf schneebedeckter Straße und den Rollwiderstand verbessern kann. Ein erfindungsgemäßer Fahrzeugreifen mit zwei unterschiedlich steifen ringförmigen Gummikomponenten kann somit den Rollwiderstand und gleichzeitig das Fahrverhalten auf schneebedeckter Fahrbahn verbessern. Dies war im Stand der Technik bisher so nicht möglich.

Die Streifen mit Compound B, die eine höhere dynamische Steifigkeit E' (+55°C) als Compound A aufweisen, stabilisieren dabei in einem erfindungsgemäßen Fahrzeugluftreifen die Streifen mit Compound A. Das führt zu einem unerwarteten Effekt beim Fahrverhalten auf der trockenen Fahrbahn, da nicht ein Werte von 105 % (dies entspricht dem Mittelwert der Referenzreifen), sondern von 107 % (vgl. Performance des erfindungsgemäßen Reifens auf trockener Fahrbahn) erreicht wurde. Dies ist ein unerwarteter vorteilhafter technischer Effekt des erfindungsgemäßen Fahrzeugluftreifens und zeigt, dass der Zielkonflikt zwischen Fahrverhalten auf trockener und schneebedeckter mit einem erfindungsgemäßen Fahrzeugluftreifen entkoppelt werden kann. Es konnte daher beispielhaft gezeigt werden, dass die Entkoppelung des Trocken- und Schneefahrverhaltens beispielsweise aufgrund verschiedener Steifigkeitsparameter der verwendeten Compounds A und B erreicht wird. Man kann dies deutlich an den Beispielen in Tabelle 2 erkennen. Die der Erfindung zugrunde liegende Aufgabe, dass der Zielkonflikt zwischen dem Fahrverhalten auf schneebedeckter (d.h. Schnee-Handling) und trockener (d.h. Trocken-Handling) Fahrbahn durch einen erfindungsgemäßen Fahrzeugluftreifen verbessert werden soll, wurde somit erreicht.

### Bezugszeichenliste:

- 1: Fahrzeugreifen; Fahrzeugluftreifen
- 2: Laufstreifen
- 3: Cap des Laufstreifens
- 4: Umfangsrille
- 5: Karkasse
- 6: Gürtellage
- 7: Spulbandagenlage
- 8: radiale Richtung
- 9: axiale Richtung
- 10: Umfangsrichtung
- 11: in axiale Richtung nacheinander angeordneten Gummikomponenten des Querschnitts des Laufstreifens
- 12: erste Gummikomponente aus der ersten Kautschukzusammensetzung
- 13: zweite Gummikomponente aus der zweiten Kautschukzusammensetzung
- 14: Lauffläche
- 15: Innerliner
- 16: Reifeninnenfläche
- 17: Reifenwulst
- 18: Höhe der ersten Gummikomponente
- 19: Breite der ersten Gummikomponente
- 20: Breite des Laufstreifens
- 21: Höhe des Laufstreifens
- 22: Mitte des Querschnitts des Laufstreifens, Mitte des Laufstreifens
- 23: Seite des Querschnitts, seitliches Ende oder Flanke des Laufstreifens
- 24: Höhe der zweiten Gummikomponente
- 25: Breite der zweiten Gummikomponente
- 26: Achse des Fahrzeugreifens
- 27: Breite der zweiten Gummikomponenten an der der Lauffläche gegenüberliegenden Seite
- 28: Breite der zweiten Gummikomponenten an der Lauffläche

## Patentansprüche

1. Fahrzeugreifen, wobei der Fahrzeugreifen (1) umfasst:
- mindestens eine Verstärkungslage (5, 6, 7),
- einen Laufstreifen (2) mit einer ersten und einer zweiten Gummikomponente (12, 13),
- mindestens einen Laufstreifenabschnitt des einen Laufstreifens (2), wobei
- der eine Laufstreifenabschnitt in radialer Richtung (8) unterhalb der Lauffläche (14) des Laufstreifens (2) des Fahrzeugreifens (1) angeordnet ist und
- ein zur Reifenumfangsrichtung (10) senkrecht verlaufender Querschnitt des einen Laufstreifenabschnitts mindestens eine erste Gummikomponente (12) mit einer sich in axialer Richtung (9) erstreckenden Breite (19) und mindestens eine zweite Gummikomponente (13) mit einer sich in axialer Richtung (9) erstreckenden Breite (25) aufweist,
- in dem einen Laufstreifenabschnitt die mindestens eine erste und die mindestens eine zweite Gummikomponente (12, 13) in axialer Richtung (9) so nacheinander angeordnet sind, dass auf eine der ersten Gummikomponente (12) eine zweite Gummikomponente (13) folgt,
- mindestens eine erste Gummikomponente (12) und/oder mindestens eine zweite Gummikomponente (13) ringförmig ist und achsensymmetrisch um die Achse (26) des Fahrzeugreifens (1) verläuft
und
- die erste Gummikomponente (12) eine erste Kautschukzusammensetzung aufweist und die zweite Gummikomponente (13) eine sich von der ersten Kautschukzusammensetzung unterscheidende zweite Kautschukzusammensetzung aufweist,
**dadurch gekennzeichnet, dass**
die erste Gummikomponente (12) ein dynamisches Speichermodul bei 55° C von mindestens 3,5 MPa aufweist
und/oder
die zweite Gummikomponente (13) ein dynamisches Speichermodul bei 55° C nach DIN 53 513 von maximal 15,0 MPa aufweist und jede erste Gummikomponente (12) ein dynamisches Speichermodul bei -15° C nach DIN 53 513 von maximal 170 MPa aufweist.

2. Fahrzeugreifen (1) nach Anspruch 1, wobei der Fahrzeugreifen (1) zusätzlich umfasst:
- zwei Seitenwände, wobei der Laufstreifen (2) seitlich von den zwei Seitenwänden begrenzt wird,
- die erste Gummikomponente (12) aus einer erste Kautschukzusammensetzung besteht und die zweite Gummikomponente (13) aus einer sich von der ersten Kautschukzusammensetzung unterscheidende zweite Kautschukzusammensetzung besteht,
- der Laufstreifenabschnitt die Cap (3) und die Base des Laufstreifens oder nur die Cap (2) des Laufstreifens umfasst, wobei der Fahrzeugreifen (1) bevorzugt keine Base im Laufstreifen (2) umfasst,
- als eine Verstärkungslage (5, 6, 7) der mindestens einen Verstärkungslagen eine Karkassenlage (5), wobei die eine Karkassenlage (5) sich über ein Paar Wulstkerne (17) des Fahrzeugreifens (1) erstreckt,
und/oder
- mindestens eine weitere Festigkeitsträgerlage, wobei die eine weitere Festigkeitsträgerlage (6, 7) zwischen der einen Karkassenlage (5) und dem einen Laufstreifenabschnitt angeordnet ist und sich die Höhe des Laufstreifens in radialer Richtung (8) von der einen weiteren Festigkeitsträgerlage (6, 7) bis zur Lauffläche (14) erstreckt.

3. Fahrzeugluftreifen nach einem der vorangehenden Ansprüche, wobei die mindestens eine erste und die mindestens eine zweite Gummikomponente (12, 13) in dem einen Laufstreifenabschnitt in axialer Richtung (9) zusätzlich so nacheinander angeordnet sind, dass auf eine zweite Gummikomponente (13) eine erste Gummikomponente (12) oder mindestens eine weitere Gummikomponente mit mindestens einer weiteren Kautschukzusammensetzung folgt.

4. Fahrzeugluftreifen nach einem der vorangehenden Ansprüche, wobei
- mindestens die erste Gummikomponente (12) und/oder mindestens die zweite Gummikomponente (13) ringförmig ist und achsensymmetrisch um die Achse des Fahrzeugreifens (1) verläuft.

5. Fahrzeugluftreifen nach einem der vorangehenden Ansprüche, wobei
- das Verhältnis von dem dynamischen Speichermodul bei - 15° C nach DIN 53 513 der ersten Gummikomponente (12) zum dynamischen Speichermodul bei - 15° C nach DIN 53 513 der zweiten Gummikomponente (13) im Bereich von 0,025 bis 0,995 liegt, bevorzugt im Bereich von 0,3 bis 0,8,
und/oder
- das Verhältnis von dem dynamischen Speichermodul bei 55° C nach DIN 53 513 der zweiten Gummikomponente (13) zum dynamischen Speichermodul bei 55° C nach DIN 53 513 der ersten Gummikomponente (12) im Bereich von 1,01 bis 1,90 liegt, bevorzugt im Bereich von 1,2 bis 1,7.

6. Fahrzeugluftreifen nach einem der vorangehenden Ansprüche, wobei
- die Höhe (18, 24) der ersten und/oder zweiten Gummikomponenten (12, 13) im Bereich von 50 % bis 100 % der Höhe (21) des Laufstreifenabschnitts oder des Laufstreifens (2) entspricht, bevorzugt im Bereich von 80 % bis 100 %
und/oder
- die Breite (19, 25) der ersten und/oder zweiten Gummikomponenten (12, 13) im Bereich von 0,1 % bis 35 % der Breite (20) des Laufstreifenabschnitts oder des Laufstreifens (2) entspricht, bevorzugt im Bereich von 0,1 % bis 20 %,

7. Fahrzeugluftreifen nach einem der vorangehenden Ansprüche, wobei sich die Höhe des Laufstreifenabschnitts über 10 % der Höhe (21) des Laufstreifens und/oder die Breite des Laufstreifenabschnitts über 10 % der Breite (20) des Laufstreifens oder
- sich der Laufstreifenabschnitt über die gesamte die Höhe (21) des Laufstreifens (2) erstreckt.

8. Fahrzeugluftreifen nach einem der vorangehenden Ansprüche, wobei das Verhältnis an Gesamtgewicht der ersten Gummikomponenten (12) aus der ersten Kautschukzusammensetzung zu dem Gesamtgewicht der zweiten Gummikomponenten (13) aus der zweiten Kautschukzusammensetzung im Bereich von 4:1 bis 1:4 liegt, bevorzugt im Bereich von 2:1 bis 1,1:1.

9. Fahrzeugluftreifen nach einem der vorangehenden Ansprüche, wobei die Höhen (18) der verschiedenen ersten Gummikomponenten (12) entlang der axialen Richtung (9) und/oder die Höhen (24) der verschiedenen zweiten Gummikomponenten (13) entlang der axialen Richtung (9) variieren.

10. Fahrzeugluftreifen nach einem der vorangehenden Ansprüche, wobei die Breiten (19) der verschiedenen ersten Gummikomponenten (12) entlang der axialen Richtung (9) und/oder die Breiten (25) der verschiedenen zweiten Gummikomponenten (13) entlang der axialen Richtung (9) variieren.

11. Fahrzeugluftreifen nach einem der vorangehenden Ansprüche, wobei
- die Breite (19) einer oder jeder einzelnen ersten Gummikomponenten (12) entlang der radialen Richtung (8) variiert und/oder
- die Breite (25) einer oder jeder einzelnen zweiten Gummikomponenten (13) entlang der radialen Richtung (8) variiert.

12. Fahrzeugluftreifen nach einem der vorangehenden Ansprüche, wobei an den Seiten (23) oder in der Mitte (22) des Querschnitts des Laufstreifens (2) das Verhältnis an Gesamtgewicht der Gummikomponenten (12) aus der ersten Kautschukzusammensetzung zu dem Gesamtgewicht der Gummikomponenten (13) aus der zweiten Kautschukzusammensetzung im Bereich von 4:1 bis 1:4 liegt, bevorzugt im Bereich von 2:1 bis 1,1:1.

13. Fahrzeugluftreifen nach Anspruch 13, wobei
- in der Mitte (22) des Querschnitts des Laufstreifens die Breiten (19) der ersten Gummikomponenten (12) größer sind als die Breiten (25) der zweiten Gummikomponenten (13) und/oder
- an den Seiten (23) des Querschnitts des Laufstreifens (2) die Breiten (19) der ersten Gummikomponenten (12) kleiner sind als die Breiten (25) der zweiten Gummikomponenten (13).

14. Fahrzeugluftreifen nach einem der Ansprüche 13 bis 14, wobei an den Seiten (23) des Querschnitts des Laufstreifens (2) die Breiten (19, 25) der ersten oder zweiten Gummikomponenten (12, 13) größer sind als deren Breiten (19, 25) in der Mitte (22) des Querschnitts des Laufstreifens (2).

## Claims

1. Vehicle tyre, wherein the vehicle tyre (1) comprises:
- at least one reinforcement ply (5, 6, 7),
- a tread (2) having a first rubber component (12) and a second rubber component (13),
- at least one tread portion of the one tread (2), wherein
- the one tread portion in the radial direction (8) is disposed below the running tread (14) of the tread (2) of the vehicle tyre (1), and
- a cross section of the one tread portion that runs perpendicularly to the tyre circumferential direction (10) has at least one first rubber component (12) having a width (19) extending in the axial direction (9), and at least one second rubber component (13) having a width (25) extending in the axial direction (9),
- in the one tread portion the at least one first rubber component (12) and the at least one second rubber component (13) in the axial direction (9) are disposed in succession such that one of the first rubber components (12) is followed by a second rubber component (13),
- at least one first rubber component (12) and/or at least one second rubber component (13) are/is annular and run/runs so as to be axially symmetrical about the axis (26) of the vehicle tyre (1),
and
- the first rubber component (12) has a first rubber composition, and the second rubber component (13) has a second rubber composition which differs from the first rubber composition,
**characterized in that**
the first rubber component (12) at 55°C has a dynamic storage modulus of at least 3.5 MPa,
and/or
the second rubber component (13) at 55°C, according to DIN 53 513, has a dynamic storage modulus of at most 15.0 MPa, and each first rubber component (12) at -15°C, according to DIN 53 513, has a dynamic storage modulus of at most 170 MPa.

2. Vehicle tyre (1) according to Claim 1, wherein the vehicle tyre (1) additionally comprises:
- two sidewalls, wherein the tread (2) is laterally delimited by the two sidewalls,
- the first rubber component (12) is composed of a first rubber composition, and the second rubber component (13) is composed of a second rubber composition which differs from the first rubber composition,
- the tread portion comprises the cap (3) and the base of the tread, or only the cap (2) of the tread, wherein the vehicle tyre (1) preferably does not comprise a base in the tread (2),
- a carcass ply (5) as a reinforcement ply (5, 6, 7) of the at least one reinforcement plies, wherein the one carcass ply (5) extends across one pair of bead cores (17) of the vehicle tyre (1),
and/or
- at least one further strengthening element ply, wherein the one further strengthening element ply (6, 7) is disposed between the one carcass ply (5) and the one tread portion, and the height of the tread in the radial direction (8) extends from the one further strengthening element ply (6, 7) to the running tread (14).

3. Pneumatic vehicle tyre according to one of the preceding claims, wherein in the one tread portion the at least one first rubber component (12) and the at least one second rubber component (13) in the axial direction (9) are additionally disposed in succession such that a second rubber component (13) is followed by a first rubber component (12) or by at least one further rubber component having at least one further rubber composition.

4. Pneumatic vehicle tyre according to one of the preceding claims, wherein
- at least the first rubber component (12) and/or at least the second rubber component (13) are/is annular and run/runs so as to be axially symmetrical about the axis of the vehicle tyre (1).

5. Pneumatic vehicle tyre according to one of the preceding claims, wherein
- the ratio of the dynamic storage modulus at - 15°C, according to DIN 53 513, of the first rubber component (12) to the dynamic storage modulus at -15°C, according to DIN 53 513, of the second rubber component (13) is in the range from 0.025 to 0.995, preferably in the range from 0.3 to 0.8,
and/or
- the ratio of the dynamic storage modulus at 55°C, according to DIN 53 513, of the second rubber component (13) to the dynamic storage modulus at 55°C, according to DIN 53 513, of the first rubber component (12) is in the range from 1.01 to 1.90, preferably in the range from 1.2 to 1.7.

6. Pneumatic vehicle tyre according to one of the preceding claims, wherein
- the height (18, 24) of the first rubber components (12) and/or second rubber components (13) corresponds to the height (21) of the tread portion or of the tread (2) in the range from 50% to 100%, preferably in the range from 80% to 100%,
and/or
- the width (19, 25) of the first rubber components (12) and/or second rubber components (13) corresponds to the width (20) of the tread portion or of the tread (2) in the range from 0.1% to 35%, preferably in the range from 0.1% to 20%.

7. Pneumatic vehicle tyre according to one of the preceding claims, wherein the height of the tread portion extends across 10% of the height (21) of the tread, and/or the width of the tread portion extends across 10% of the width (20) of the tread,
or
- the tread portion extends across the entire height (21) of the tread (2).

8. Pneumatic vehicle tyre according to one of the preceding claims, wherein the ratio of the total weight of the first rubber components (12) from the first rubber composition to the total weight of the second rubber components (13) from the second rubber composition is in the range from 4:1 to 1:4, preferably in the range from 2:1 to 1.1:1.

9. Pneumatic vehicle tyre according to one of the preceding claims, wherein the heights (18) of the various first rubber components (12) vary along the axial direction (9), and/or the heights (24) of the various second rubber components (13) vary along the axial direction (9).

10. Pneumatic vehicle tyre according to one of the preceding claims, wherein the widths (19) of the various first rubber components (12) vary along the axial direction (9), and/or the widths (25) of the various second rubber components (13) vary along the axial direction (9).

11. Pneumatic vehicle tyre according to one of the preceding claims, wherein
- the width (19) of one or of each individual first rubber component (12) varies along the radial direction (8), and/or
- the width (25) of one or of each individual second rubber component (13) varies along the radial direction (8).

12. Pneumatic vehicle tyre according to one of the preceding claims, wherein on the sides (23) or in the centre (22) of the cross section of the tread (2) the ratio of the total weight of the rubber components (12) from the first rubber composition to the total weight of the rubber components (13) from the second rubber composition is in the range from 4:1 to 1:4, preferably in the range from 2:1 to 1.1:1.

13. Pneumatic vehicle tyre according to Claim 13, wherein
- in the centre (22) of the cross section of the tread the widths (19) of the first rubber components (12) are larger than the widths (25) of the second rubber components (13), and/or
- on the sides (23) of the cross section of the tread (2) the widths (19) of the first rubber components (12) are smaller than the widths (25) of the second rubber components (13).

14. Pneumatic vehicle tyre according to one of Claims 13 to 14, wherein on the sides (23) of the cross section of the tread (2) the widths (19, 25) of the first rubber components (12) or second rubber components (13) are larger than the widths (19, 25) of said first rubber components (12) or second rubber components (13) in the centre (22) of the cross section of the tread (2).

## Revendications

1. Pneumatique de véhicule, le pneumatique de véhicule (1) comprenant :
- au moins une nappe de renfort (5, 6, 7),
- une bande de roulement (2) comprenant un premier et un deuxième composant caoutchouteux (12, 13),
- au moins une portion de bande de roulement de la bande de roulement (2),
- ladite au moins une portion de bande de roulement étant disposée au-dessous de la surface de roulement (14) de la bande de roulement (2) du pneumatique de véhicule (1) dans la direction radiale (8) et
- une section transversale de ladite au moins une portion de bande de roulement, laquelle section transversale s'étend perpendiculairement à la direction circonférentielle (10) du pneumatique, comprenant au moins un premier composant caoutchouteux (12) ayant une largeur (19) qui s'étend dans la direction axiale (9) et au moins un deuxième composant caoutchouteux (13) ayant une largeur (25) qui s'étend dans la direction axiale (9),
- dans ladite au moins une portion de bande de roulement, l'au moins un premier et l'au moins un deuxième composant caoutchouteux (12, 13) étant disposés l'un après l'autre dans la direction axiale (9) de sorte que l'un des premiers composants caoutchouteux (12) soit suivi par un deuxième composant caoutchouteux (13),
- au moins un premier composant caoutchouteux (12) et/ou au moins un deuxième composant caoutchouteux (13) étant de forme annulaire et s'étendant de manière axialement symétrique autour de l'axe (26) du pneumatique de véhicule (1)
et
- le premier composant caoutchouteux (12) ayant une première composition caoutchouteuse et le deuxième composant caoutchouteux (13) ayant une deuxième composition caoutchouteuse qui est différente de la première composition caoutchouteuse,
**caractérisé en ce que**
le premier composant caoutchouteux (12) a un module de stockage dynamique à 55 °C d'au moins 3,5 MPa
et/ou
le deuxième composant caoutchouteux (13) a un module de stockage dynamique à 55 °C selon DIN 53 513 de 15,0 MPa maximum et chaque premier composant caoutchouteux (12) a un module de stockage dynamique à -15 °C selon DIN 53 513 de 170 MPa maximum.

2. Pneumatique de véhicule (1) selon la revendication 1, le pneumatique de véhicule (1) comprenant en outre :
- deux parois latérales, la bande de roulement (2) étant délimitée latéralement par les deux parois latérales,
- le premier composant caoutchouteux (12) ayant une première composition caoutchouteuse et le deuxième composant caoutchouteux (13) ayant une deuxième composition caoutchouteuse qui est différente de la première composition caoutchouteuse,
- la portion de bande de roulement comprenant le chapeau (3) et la base de la bande de roulement ou seulement le chapeau (2) de la bande de roulement, le pneumatique de véhicule (1) ne comprenant de préférence pas de base dans la bande de roulement (2)
- une nappe de carcasse (5) comme nappe de renfort (5, 6, 7) des au moins une nappes de renfort, la nappe de carcasse (5) s'étendant sur une paire de cœurs de talon (17) du pneumatique de véhicule (1), et/ou
- au moins une autre nappe de renfort, ladite au moins une autre nappe de renfort (6, 7) étant disposée entre ladite au moins une nappe de carcasse (5) et ladite au moins une portion de bande de roulement et la hauteur de la bande de roulement s'étendant dans la direction radiale (8) de ladite au moins une autre nappe de renfort (6, 7) jusqu'à la surface de roulement (14) .

3. Pneumatique de véhicule selon l'une des revendications précédentes, l'au moins un premier et l'au moins un deuxième composant caoutchouteux (12, 13) sont en outre disposés dans ladite au moins une portion de bande de roulement l'un après l'autre dans la direction axiale (9) de sorte qu'un deuxième composant caoutchouteux (13) soit suivi d'un premier composant caoutchouteux (12) ou d'au moins un autre composant caoutchouteux ayant au moins une autre composition caoutchouteuse.

4. Pneumatique de véhicule selon l'une des revendications précédentes,
- au moins le premier composant caoutchouteux (12) et/ou au moins le deuxième composant caoutchouteux (13) étant de forme annulaire et s'étendant de manière axialement symétrique autour de l'axe du pneumatique de véhicule (1).

5. Pneumatique de véhicule selon l'une des revendications précédentes,
- le rapport du module de stockage dynamique à - 15 °C selon DIN 53 513 du premier composant caoutchouteux (12) au module de stockage dynamique à - 15 °C selon DIN 53 513 du deuxième composant caoutchouteux (13) étant dans la gamme allant de 0,025 à 0,995, de préférence dans la gamme allant de 0,3 à 0, 8,
et/ou
- le rapport du module de stockage dynamique à 55 °C selon DIN 53 513 du deuxième composant caoutchouteux (13) au module de stockage dynamique à 55 °C selon DIN 53 513 du premier composant caoutchouteux (12) étant dans la gamme allant de 1,01 à 1,90, de préférence dans la gamme allant de 1,2 à 1,7.

6. Pneumatique de véhicule selon l'une des revendications précédentes,
- la hauteur (18, 24) des premier et/ou deuxième composants caoutchouteux (12, 13) étant dans la gamme allant de 50 % à 100 % de la hauteur (21) de la portion de bande de roulement ou de la bande de roulement (2), de préférence dans la gamme allant de 80 % à 100 % et/ou
- la largeur (19, 25) des premier et/ou deuxième composants caoutchouteux (12, 13) étant dans la gamme allant de 0,1 % à 35 % de la largeur (20) de la portion de bande de roulement ou de la bande de roulement (2), de préférence dans la gamme allant de 0,1 % à 20 %.

7. Pneumatique de véhicule selon l'une des revendications précédentes, la hauteur de la portion de bande de roulement étant supérieure à 10 % de la hauteur (21) de la bande de roulement et/ou la largeur de la portion de bande de roulement étant supérieure à 10 % de la largeur (20) de la bande de roulement
ou
- la portion de bande de roulement s'étendant sur toute la hauteur (21) de la bande de roulement (2).

8. Pneumatique de véhicule selon l'une des revendications précédentes, le rapport du poids total des premiers composants caoutchouteux (12) ayant la première composition caoutchouteuse au poids total des deuxièmes composants caoutchouteux (13) ayant la deuxième composition caoutchouteuse étant dans la gamme allant de 4:1 à 1:4, de préférence dans la gamme allant de 2:1 à 1,1:1.

9. Pneumatique de véhicule selon l'une des revendications précédentes, les hauteurs (18) des différents premiers composants caoutchouteux (12) variant dans la direction axiale (9) et/ou les hauteurs (24) des différents deuxièmes composants caoutchouteux (13) variant dans la direction axiale (9).

10. Pneumatique de véhicule selon l'une des revendications précédentes, les largeurs (19) des différents premiers composants caoutchouteux (12) variant dans la direction axiale (9) et/ou les largeurs (25) des différents deuxièmes composants caoutchouteux (13) variant dans la direction axiale (9).

11. Pneumatique de véhicule selon l'une des revendications précédentes,
- la largeur (19) d'un ou de chaque premier composant caoutchouteux individuel (12) variant dans la direction radiale (8) et/ou
- la largeur (25) d'un ou de chaque deuxième composant caoutchouteux individuel (13) variant dans la direction radiale (8).

12. Pneumatique de véhicule selon l'une des revendications précédentes, sur les côtés (23) ou au milieu (22) de la section transversale de la bande de roulement (2) le rapport du poids total des composants caoutchouteux (12) ayant la première composition caoutchouteuse au poids total des composants caoutchouteux (13) ayant la deuxième composition caoutchouteuse étant dans la gamme allant de 4:1 à 1:4, de préférence dans la gamme allant de 2:1 à 1,1:1.

13. Pneumatique de véhicule selon la revendication 13,
- au milieu (22) de la section transversale de la bande de roulement, les largeurs (19) des premiers composants caoutchouteux (12) étant supérieures aux largeurs (25) des deuxièmes composants caoutchouteux (13) et/ou
- sur les côtés (23) de la section transversale de la bande de roulement (2) les largeurs (19) des premiers composants caoutchouteux (12) étant inférieures aux largeurs (25) des deuxièmes composants caoutchouteux (13).

14. Pneumatique de véhicule selon l'une des revendications 13 à 14, sur les côtés (23) de la section transversale de la bande de roulement (2) les largeurs (19, 25) des premiers ou deuxièmes composants caoutchouteux (12, 13) étant supérieures à leurs largeurs (19, 25) au milieu (22) de la section transversale de la bande de roulement (2).
